# FASCICULE DE BREVET EUROPEEN

(11) **EP 2 204 889 B1**
(45) Date de publication et mention de la délivrance du brevet: **30.03.2016**
(21) Numéro de dépôt: 10150004.9
(22) Date de dépôt: 04.01.2010
(51) Int. Cl.: H02B 1/052

(54) **Butée d'arrêt pour un bornier**
Endanschlag für Klemmleiste
End stop for terminal block

(30) Priorité: 06.01.2009 FR 0950033
(43) Date de publication de la demande: 07.07.2010
(73) Titulaire: ABB Technology AG, 8050 Zürich (CH)
(72) Inventeur: Da Silva, Franck, 38300, Saint Savin (FR)
(74) Mandataire: Verriest, Philippe

(56) Documents cités:
- DE-B- 1 173 159
- DE-U- 7 039 898
- FR-A- 2 730 869

## Description

La présente invention se rapporte à une butée d'arrêt pour un bornier formé d'un ensemble d'appareils électriques montés sur un rail de support.

Une butée d'arrêt est montée en général sur un rail modulaire, lui-même fixé à une platine d'une armoire électrique, aux deux extrémités d'un bornier composé de différents blocs ou appareils électriques. Le système de fixation des butées d'arrêt au rail est plus efficace que celui des blocs ou appareils électriques. On peut ainsi serrer les uns contre les autres les différents éléments du bornier en plaçant de chaque côté une butée d'arrêt.

Une armoire électrique compte généralement un très grand nombre de blocs et autres appareils électriques et chacun sont habituellement placés par borniers dans une même zone de l'armoire en fonction de leur asservissement avec des éléments de l'installation contrôlés ou commandés par les composants de l'armoire, tels que par exemple des moteurs, des freins, des voyants ou autres interrupteurs. Le fait de placer des butées d'arrêt délimitant les différents borniers présents dans l'armoire facilite également l'identification et le repérage de ces différents borniers dans l'armoire.

Il peut également être nécessaire pour les mêmes raisons de repérage mais aussi pour des raisons esthétiques et de protection, de devoir recouvrir l'ensemble du bornier à l'aide d'un capot. Cependant de part son dimensionnement et sa composition généralement en plastique souple, la fixation du capot n'est généralement pas satisfaisante. L'instabilité du capot est accentuée lorsque le capot présente une ouverture centrale sur sa longueur pour permettre par exemple la visualisation des composants qu'il recouvre partiellement, cette ouverture diminuant la rigidité de celui-ci.

Il est connu du document DE 70 39 898 U de disposer d'une butée d'arrêt comprenant un corps isolant et un pied d'accrochage distincts, et des moyens de solidarisation du pied d'accrochage et du corps isolant, les moyens de solidarisation du corps isolant sur le pied d'accrochage comprenant des moyens de serrage reçus dans un logement du corps isolant.

Le document DE1173159 divulgue un insert agencé pour obtenir le logement recevent les moyens de serrage. Cependant, cette butée ne résout pas les problèmes de protection et de sécurité.

La présente invention a pour but de remédier aux inconvénient précédemment évoqués, et en particulier de permettre une fixation stable et solide du capot sur le bornier.

A cet effet, la présente invention a pour objet une butée d'arrêt pour un bornier formé d'un ensemble d'appareils électriques montés sur un rail de support comprenant un corps isolant et un pied d'accrochage distincts, et des moyens de solidarisation du pied d'accrochage et du corps isolant, les moyens de solidarisation du corps isolant sur le pied d'accrochage comprenant des moyens de serrage reçus dans un logement du corps isolant, la butée d'arrêt comportant des moyens de fixation d'un capot agencé pour recouvrir tout ou partie du bornier formé de l'ensemble des appareils électriques, la butée d'arrêt comprend un insert agencé pour obturer le logement recevant les moyens de serrage, et caractérisée en ce que l'insert comprend au moins une portion de blocage du capot sur le corps isolant agencée pour réaliser le blocage du capot entre la portion du blocage et une partie du corps isolant lorsque l'insert est fixé dans le logement du corps isolant.

Ces dispositions permettent d'avoir un deuxième moyen dé fixation du capot à la butée d'arrêt.

Avantageusement, sont agencés des moyens d'inviolabilité destinés à être altérés ou détruits lors de la désolidarisation de l'insert et/ou du capot de la butée.

Pour éviter la rotation du corps autour du pied de fixation, l'invention prévoit également que des moyens de solidarisation du corps isolant sur le pied d'accrochage comprennent des moyens de guidage en translation du pied par rapport au corps isolant.

Avantageusement, les moyens de fixation du capot comprennent une portion du corps isolant agencée pour réaliser une fixation par complémentarité de forme avec le profil du capot, idéalement le capot est monté directement sur tout le contour des butées d'arrêts par emboitement élastique autour de leur corps isolant.

Ces dispositions permettent d'avoir un premier moyen de fixation du capot à la butée d'arrêt.

Le pied d'accrochage peut également à cet effet comporter des griffes retournées vers la face arrière du rail.

La présente invention concerne également un ensemble comprenant au moins une butée d'arrêt telle que décrite ci-dessus, et un capot s'adoptant sur la ou les butées d'arrêts et recouvrant tout ou partie du bornier de jonction.

De toute façon, l'invention sera bien comprise à l'aide de la description qui suit, en référence aux dessins schématiques annexés représentant, à titre d'exemple non limitatif, une forme de mise en oeuvre de cette butée d'arrêt.
La figure 1 est une vue en perspective éclatée d'une butée d'arrêt comprenant un corps isolant, un pied de fixation rigide, une vis de fixation du corps sur le pied et un insert pouvant obturer le passage de vis.
La figure 2 est une vue en perspective d'une butée d'arrêt assemblée avec l'ensemble des composants de la figure 1.
La figure 3 est une vue en perspective d'un capot pouvant se fixer sur la butée d'arrêt présentée aux figures 1 et 2.

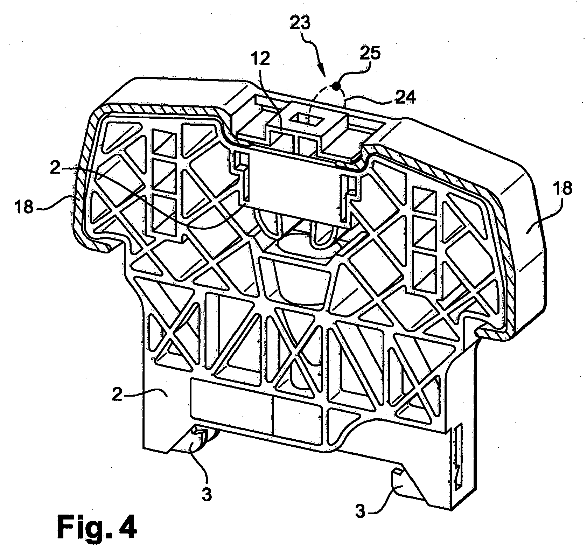

La figure 4 est une vue en perspective de l'assemblage de l'ensemble butée d'arrêt suivant l'invention et d'un capot.

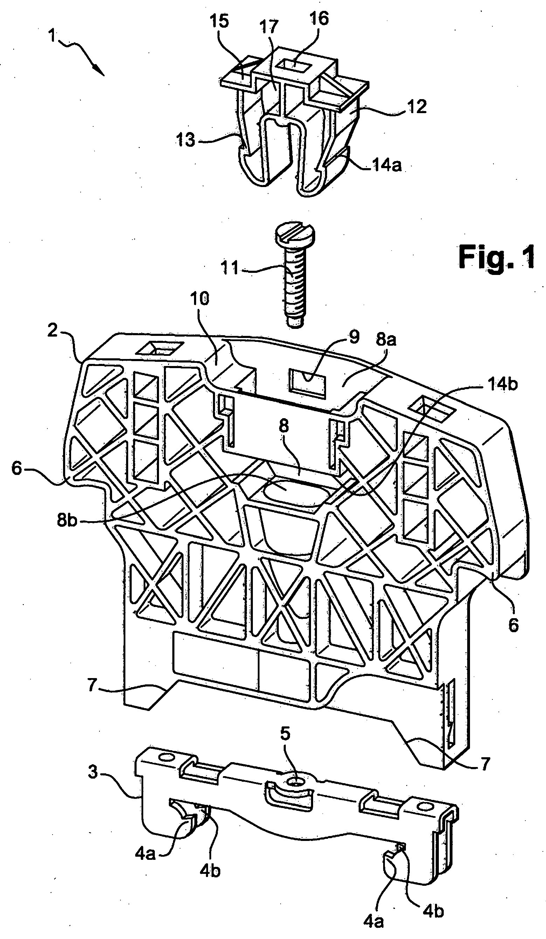

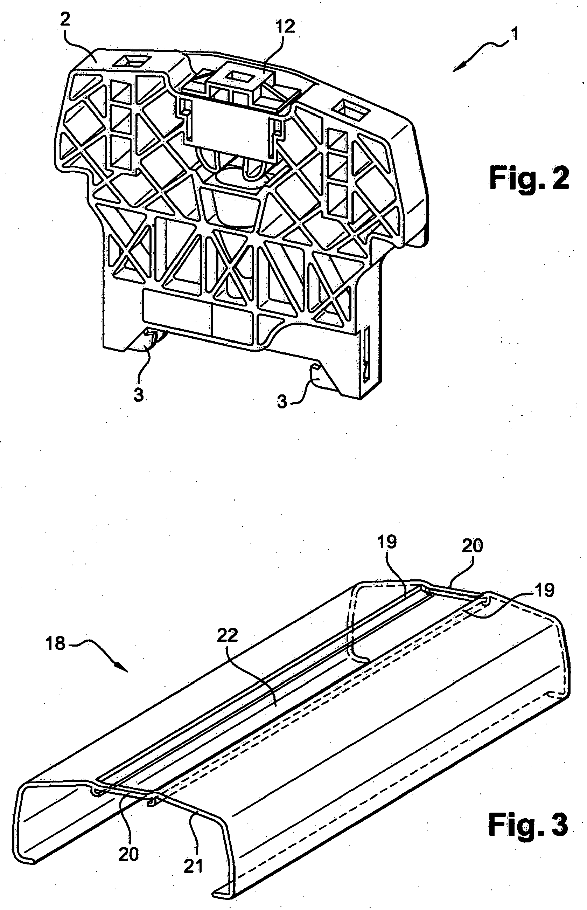

Comme représentée sur les figures 1 et 2, une butée d'arrêt 1 est composée d'un pied de fixation 3 rigide généralement en métal, d'un corps isolant 2 habituellement en matière plastique, d'une vis de fixation 11 souvenu à tête plate et d'un insert 12.

Le pied de fixation 3 est composé d'une base rectangulaire à partir de laquelle s'étendent de ces quatres coins, quatre pattes se terminant par un ergot en forme de griffe 4a tournées vers la base. Les pattes sont disposées deux à deux dans le même sens sur chaque extrémité d'une largeur de la base, formant ainsi deux couples de pattes de sens opposé. Chaque patte présente une surface concave 4b permettant l'insertion des branches du rail, et la base est pourvue en son centre d'un filetage 5 pouvant acceuillir une vis 11.

Le corps isolant 2 possède lui aussi une base de forme rectangulaire complémentaire à celle de la base du pied de fixation 3. Cette base est creuse et de dimensions légèrements supérieures à celles de la base du pied 3 afin de permettre l'insertion de la base du pied 3 dans la base du corps isolant 2. Cette base du corps isolant 2 présente également des portions biseautées 7 de directions opposées deux à deux.

Le corps 2 présente également sur ses flancs deux épaulements 6 et plus globalement un contour complémentaire au profil 21 du capot de la figure 3.

Il contient également un logement 8 comprenant un conduit 8a et une zone de réception 8b de la vis 11, débouchant face au filetage 5 situé sur la base du pied de fixation 3, et par lequel il est possible de faire traverser une vis 11. A ce propos, le logement 8 présente un rétrécissement de son diamètre entre le conduit 8a et la zone de réception de la vis 8b dessinant ainsi un support à la tête de vis 11 agencé de manière à avoir une portée maximale adaptée à la tête de vis 11. Avantageusement, il est également possible d'intégrer au corps 2 une partie métallique du type rondelle, plus solide sur la zone de contact avec la tête de vis 11 lors du serrage.

De même, le logement 8 de l'insert 12 sur le corps 2 contient deux portions 14b de maintien de forme complémentaire aux ergots 14a situés sur les pattes 13 de l'insert 12.

Le conduit 8a présente aussi deux portions 10 dont la surface est complémentaire aux épaulements 6 situés sur les bords de l'ouverture centrale 22 du capot 18 tel que représenté à la figure 3.

Et enfin, le corps 2 comporte également une ouverture 9 sur sa face externe débouchant à l'intérieur du conduit 8a au niveau de l'emplacement de l' insert 12.

La vis 11 est quant à elle idéalement à tête plate pour optimiser la force exercée par la vis 11 sur le corps 2 lors du serrage. Elle traverse entièrement le logement 8 sur le corps 2 et il n'est pas nécessaire qu'elle soit filetée sur toute sa longueur mais uniquement à son extrémité sur une longueur correspondant à la course maximale du pied de fixation 3 dans le rail en y ajoutant éventuellement la longueur pouvant être perdue lors du serrage sur le rail par l'écrasement ou la déformation des portions biseautées 7 de la base du corps 2.

L'insert 12 a quant à lui une forme en U avec des pattes 13 pouvant se déformer élastiquement suivant le plan du U afin de permettre une fixation par remboîtement élastique dans son logement 8 à travers le conduit 8a de vis 11 du corps 2 de la butée d'arrêt 1.

Chaque patte 13 de l'insert 12 présente un ergot 14a maintenant l'insert 12 en position lorsque celui-ci se trouve dans son logement 8.

Une portion de blocage du capot est avantageusement formée par deux ailettes 15 opposées fixées sur les bords de la base du U de insert 12.

L'insert 12 comporte également sur la base de ce U, deux ouvertures 16,17 approximativement à 90° dont l'une 16 débouche sur la surface entre les deux ailettes 15 et l'autre 17 se retrouve en regard avec l'ouverture 9 située dans le logement 8 du corps isolant 2 de la butée d'arrêt lorsque l'insert 12 est positionné dans son logement 8.

Le pied de fixation 3 est monté sur le rail tout d'abord en insérant deux pattes sur une des branches du rail puis en ramenant les deux autres pattes vers l'arrière de l'autre branche du rail, l'écart entre le fond du creux 4b formé par un couple de pattes et l'extrémité des griffes 4a des pattes opposées étant légèrement supérieur à l'écart entre les extrémités des branches du rail. Une fois le pied de fixation 3 positionné sur le rail, le corps isolant 2 de la butée d'arrêt 1 est insérée sur la base du pied 3. La partie du corps 2 insérée et la base du pied 3 ayant des formes complémentaires, le corps isolant 2 est guidé en translation jusqu'au contact avec le rail c'est-à-dire jusqu'à ce que les portions biseautées 7 de la base du corps 2 de la butée 1 viennent au contact des extrémités des branches du rail. Cela confère quatre points d'appui au corps 2 sur le rail et centre l'ensemble pied de fixation 3 et corps 2 de la butée d'arrêt 1 sur le rail.

La base présente en son centre un filetage 5 dans lequel vient ensuite se visser une vis 11 à tête plate ou conique qui s'introduit par le conduit 8a situé dans le corps 2 de la butée d'arrêt 1. La tête de vis 11 prend appui sur une surface de sa zone de réception 8b, dont la forme coïncide avec celle de la tête de vis 11, puis la vis 11 s'engage dans le filetage 5 situé au centre de la base du pied de fixation. En vissant la vis 11, le pied de fixation 3 se déplace en translation, guidé par le corps 2 de la butée 1, jusqu'à ce que les griffes 4a du pied 3 viennent en prise contre la partie arrière du rail, fixant ainsi fermement au rail l'ensemble pied de fixation 3 et corps 2 de butée d'arrêt 1. Suivant la force de serrage, il il est également possible que les portions biseautées 7 de la base du corps 2 s'écrasent légèrement sur les extrémités des branches du rail conférant ainsi une efficacité de serrage accrue.

Une fois les butées d'arrêt 1 fixées au rail, il est possible de présenter le capot 18. Celui-ci se fixe tout d'abord aux butées d'arrêt 1 par emboîtement élastique, créant une fixation par complémentarité de forme entre les flancs des butées d'arrêt 1 et le profil 21 du capot 18.

La fixation finale est assurée par les inserts 12 qui grâce à leurs ailettes 15 viennent bloquer contre le corps 2 des butées d'arrêt 1 des portions 19 du bord de l'ouverture centrale 22 du capot 18. A cette fin, la longueur des pattes 13 de l'insert 12 entre ses points de fixation et les ailettes 15 a une longueur prédeterminée permettant le blocage du capot 18.

Pour sécuriser l'installation, une fois l'insert 12 en place, il est également possible d'introduire par les orifices 16,17 de l'insert 12 et du corps 2 de la butée d'arrêt 1 un dispositif de scellé ou de plombage venant ceinturer l'extrémité 20 du bord de l'ouverture centrale 22 du capot 18 empêchant tout accès au bornier et dépôt du capot 18.

Comme il va de soi, l'invention ne se limite pas à la forme de réalisation préférentielle décrite ci-dessus, à titre d'exemple non-limitatif ; elle en embrasse au contraire toutes les variantes.

## Revendications

1. Butée d'arrêt (1) pour un bornier formé d'un ensemble d'appareils électriques montés sur un rail de support comprenant un corps isolant (2) et un pied d'accrochage (3) distincts, et des moyens de solidarisation du pied d'accrochage (3) et du corps isolant (2), les moyens de solidarisation du corps isolant (2) sur le pied d'accrochage (3) comprenant des moyens de serrage reçus dans un logement (8) du corps isolant (2), la butée d'arrêt (1) comportant des moyens de fixation d'un capot (18) agencé pour recouvrir tout ou partie du bornier formé de l'ensemble des appareils électriques, la butée d'arrêt (1) comprenant un insert (12) agencé pour obturer le logement (8) recevant les moyens de serrage, ladite butée d'arrêt (1) étant **caractérisée en ce que** l'insert (12) comprend au moins une portion de blocage du capot (18) sur le corps isolant (2) agencée pour réaliser le blocage du capot (18) entre la portion de blocage et une partie (10) du corps isolant (2) lorsque l'insert (12) est fixé dans le logement (8) du corps isolant (2).

2. Butée d'arrêt (1) selon la revendication 1 comprenant des moyens d'inviolabilité destinés à être altérés ou détruits lors de la désolidarisation de l'insert (12) et/ou du capot (18) de la butée (1).

3. Butée d'arrêt (1) selon l'une des revendications précédentes, dans laquelle les moyens de solidarisation du corps isolant (2) sur le pied d'accrochage (3) comprennent des moyens de guidage en translation du pied (3) par rapport au corps isolant (2).

4. Butée d'arrêt (1) selon l'une des revendications précédentes dans laquelle les moyens de fixation du capot (18) comprennent une portion du corps isolant (2) agencée pour réaliser une fixation par complémentarité de forme avec le profil (21) du capot (18).

5. Butée d'arrêt (1) selon l'une des revendications précédentes, dans laquelle le pied d'accrochage (3) comporte des griffes (4) retournées vers la face arrière du rail.

6. Ensemble comprenant :
- au moins une butée d'arrêt (1) selon l'une des revendications précédentes, et
- un capot (18) s'adaptant sur la ou les butées d'arrêts (1) et recouvrant tout ou partie du bornier de jonction.

## Patentansprüche

1. Endanschlag (1) für eine Klemmleiste, die aus einer Einheit von elektrischen Apparaten gebildet wird, die auf einer Tragschiene montiert sind, einen Isolierkörper (2) und einen davon getrennten Rastfuß (3) umfassend, sowie Mittel zum festen Verbinden des Rastfußes (3) und des Isolierkörpers (2), wobei die Mittel zum festen Verbinden des Isolierkörpers (2) am Rastfuß (3) Mittel zum Festklemmen umfassen, die in eine Aufnahme (8) des Isolierkörpers (2) eingelassen sind, wobei der Endanschlag (1) Befestigungsmittel für eine Abdeckung (18) umfasst, die angeordnet ist, um die gesamte Klemmleiste oder einen Teil davon abzudecken, die aus der Einheit von elektrischen Apparaten gebildet wird, wobei der Endanschlag (1) einen Einsatz (12) umfasst, der angeordnet ist, um die Aufnahme (8) abzudecken, welche die Mittel zum Festklemmen aufnimmt, wobei der besagte Endanschlag (1) **dadurch gekennzeichnet ist, dass** der Einsatz (12) zumindest einen Halteabschnitt für die Abdeckung (18) auf dem Isolierkörper (2) umfasst, der angeordnet ist, um die Abdeckung (18) zwischen dem Halteabschnitt und einem Abschnitt (10) des Isolierkörpers (2) zu blockieren, wenn der Einsatz (12) in der Aufnahme (8) des Isolierkörpers (2) befestigt ist.

2. Endanschlag (1) nach Anspruch 1, manipulationssichere Mittel umfassend, die dazu bestimmt sind, bei der Abnahme des Einsatzes (12) und/ oder der Abdeckung (18) vom Anschlag (1) beschädigt oder zerstört zu werden.

3. Endanschlag (1) nach einem der vorherigen Ansprüche, wobei die Mittel zum festen Verbinden des Isolierkörpers (2) am Rastfuß (3) Mittel zum Führen in Längsrichtung des Fußes (3) im Verhältnis zum Isolierkörper (2) umfassen.

4. Endanschlag (1) nach einem der vorherigen Ansprüche, wobei die Befestigungsmittel für die Abdeckung (18) einen Abschnitt des Isolierkörpers (2) umfassen, der angeordnet ist, um eine Befestigung durch Formergänzung mit dem Profil (21) der Abdeckung (18) durchzuführen.

5. Endanschlag (1) nach einem der vorherigen Ansprüche, wobei der Rastfuß (3) Krallen (4) umfasst, die zur Rückseite der Schiene gerichtet sind.

6. Baugruppe, folgendes umfassend:
- zumindest einen Endanschlag (1) nach einem der vorherigen Ansprüche, und
- eine Abdeckung (18), die sich dem oder den Endanschlägen (1) anpasst, und die gesamte Verbindungsklemmleiste oder einen Teil davon abdeckt.

## Claims

1. An end stop (1) for a terminal board formed of a set of electrical apparatuses mounted on a support rail comprising an insulating body (2) and an attachment foot (3) which are separate from one another, and means for securing the attachment foot (3) and the insulating body (2), the means for securing the insulating body (2) on the attachment foot (3) comprising clamping means received in a housing (8) of the insulating body (2), the end stop (1) including means for fastening a cowl (18) arranged to cover all or part of the terminal board formed of the set of the electrical apparatuses, the end stop (1) comprising an insert (12) arranged to close the housing (8) receiving the clamping means, said end stop (1) being **characterized in that** the insert (12) comprises at least one blocking portion of the cowl (18) on the insulating body (2) arranged to carry out the blocking of the cowl (18) between the blocking portion and a part (10) of the insulating body (2) when the insert (12) is fastened in the housing (8) of the insulating body (2).

2. The end stop (1) according to claim 1, comprising tamper-evident means intended to be deteriorated or destroyed during the separation of the insert (12) and/or of the cowl (18) from the stop (1).

3. The end stop (1) according to any of the preceding claims, wherein the means for securing the insulating body (2) on the attachment foot (3) comprise means for guiding in translation the foot (3) relative to the insulating body (2).

4. The end stop (1) according to any of the preceding claims, wherein the fastening means of the cowl (18) comprise a portion of the insulating body (2) arranged to carry out a form-fitting fastening with the profile (21) of the cowl (18).

5. The end stop (1) according to any of the preceding claims, wherein the attachment foot (3) includes claws (4) turned towards the rear face of the rail.

6. A set comprising:
- at least one end stop (1) according to any of the preceding claims, and
- a cowl (18) fitting on the end stop(s) (1) and covering all or part of the connection terminal board.
